# EUROPEAN PATENT SPECIFICATION

(11) **EP 1 597 934 B1**
(45) Date of publication and mention of the grant of the patent: **13.06.2007**
(21) Application number: 04715334.1
(22) Date of filing: 27.02.2004
(51) Int. Cl.: H04Q 7/38

(54) **RADIO TERMINAL SESSION CONTROL AND INTERFACE SET UP METHOD**
SESSIONSTEUERUNGSVERFAHREN FÜR EIN DRAHTLOSES ENDGERÄT UND SCHNITTSTELLENSTEUERUNGSVERFAHREN
PROCEDE DE COMMANDE DE SESSION DE TERMINAUX RADIO ET PROCEDE D'ETABLISSEMENT D'INTERFACE

(30) Priority: 28.02.2003 JP 2003054996
(43) Date of publication of application: 23.11.2005
(73) Proprietor: MOTOROLA, INC., Schaumburg, IL 60196 (US)
(72) Inventor: NAKAJIMA, Masayuki, Musashino-shi, Tokyo 180-0001 (JP); EGUCHI, Hidehiko, Tokyo 206-0034 (JP); NAKAI, Noriyuki, Yokohama-shi, Kanagawa 226-0026 (JP); UMUKATA, Tomohiro, Ota-ku, Tokyo 144-0051 (JP)
(74) Representative: McLeish, Nicholas Alistair Maxwell
(86) International application number: PCT/EP2004/050226
(87) International publication number: WO 2004/077867

(56) References cited:
- EP-A- 1 206 155
- MAHMUD K ET AL: "Mobility management by basic access network in MIRAI architecture for heterogeneous wireless systems" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 November 2002 (2002-11-17), pages 1708-1712, XP010636435 ISBN: 0-7803-7632-3
- WU G ET AL: "MIRAI ARCHITECTURE FOR HETEROGENEOUS NETWORK" IEEE COMMUNICATIONS MAGAZINE, IEEE SERVICE CENTER. PISCATAWAY, N.J, US, vol. 40, no. 2, February 2002 (2002-02), pages 126-134, XP001125429 ISSN: 0163-6804

## Description

### BACKGROUND OF THE INVENTION

The present invention relates to radio terminal session control and interface setup methods.

A Multimedia Integrated network by Radio Access Innovation (MIRAI) has been proposed which connects a plurality of dissimilar radio access networks (RANs), such as, for example, wireless LANs and PHS, through a common core network, to enable seamless communication among those dissimilar radio access networks (Non-patent Reference 1).

The MIRAI comprises, as its architecture, a high-functionality common core network, a signaling network, and a Software Defined Radio (SDR) terminal or multimode radio terminal. It should be appreciated that the multimode radio terminal includes a plurality of interfaces and applications, so that when it is to communicate, it uses a unique ID (numeral or URI, etc.) for specifying the terminal. The SDR terminal or multimode terminal transmits its location information and so forth to the common core network, which selects a radio access network based on that information, and the selected radio access network information is notified to the SDR terminal or multimode terminal, whereby a system for an optimum radio access network is downloaded or alerted to the SDR terminal or multimode terminal.

In other words, with the MIRAI network scheme, management of the radio access network, session, and user information is implemented univocally by the core network, so that a system is assumed where a plurality of radio access networks are integrated closely.

[Non-patent Reference 1] G. Wu, et. al., "MIRAI architecture for heterogeneous networks", IEEE Comm. Mag., Feb. 2002

In actuality, however, each of the radio access networks is managed by its respective operator, and it is practically difficult to seamlessly integrate the existing radio access networks and univocally manage them.

More specifically, for communication in the MIRAI network, when a session is to be established, it is necessary to select a radio interface and application suitable for the session. Especially, when a call is made from a terminal, a necessary network may be selected, because the calling party recognizes both the session-related information and the radio access network and application to be used. However, the called terminal cannot know beforehand what type of session is to be established. Thus, it is necessary to activate all the networks, or efficiently select, on the network side, a radio network and application suitable for the media session before the session is established. As a result, each of the radio access networks becomes complicated and enormous in size, so that they are hardly practicable.

When switching is to be made to a dissimilar radio access network while the session is being established, an IP connection is made between an access point of the target radio access network and an access network server of an Internet service provider, before the pervious session parameters are changed. Unless the IP connection is made quickly, a problem would occur such that the communication is disconnected and switching to a dissimilar radio access network fails. In MAHMUD K ET AL: "Mobility management by basic network in MIRAI architecture for heterogeneous wireless systems" GLOBECOM' 02.2002 - IEEE GLOBAL TELECOMMUNICATIONS CONFERENCE. CONFERENCE PROCEEDINGS. TAIPEI, TAIWAN, NOV. 17-21, 2002, IEEE GLOBAL TELECOMMUNICATIONS CONFERENCE, NEW YORK, NY: IEEE, US, vol. VOL. 1 OF 3, 17 November 2002 (2002-11-17), pages 1708-1712, XPO10636435 ISBN: 0-7803-7632-3 there is described a method used in a MIRAI in which when a request for connection is made, the request is sent to the radio terminal using a common signaling network and the radio terminal selects which radio interface to use. However, this method does not send session-related information to the called terminal. Neither does the method select the radio interface and the application to be used according to this session-related information received.

The present invention is intended to solve at least one of the aforedescribed problems, and has as its objective to provide a radio terminal session control method, where each of the radio access networks is selected by a radio terminal to implement a MIRAI network without burdening each of the radio access networks.

Another objective of the present invention is to provide an interface setup method where IP connection can be set up quickly when switching is made to a dissimilar radio access network.

### SUMMARY OF THE INVENTION

According to one aspect of the invention there is provided Multimedia Integrated network by Radio Access Innovation that comprises a plurality of dissimilar radio access networks and the Internet that connects among said radio access networks, wherein:
one of said radio access networks is employed as a signaling network;
a server is provided in said Internet such that when a request for connection with a radio terminal is made, session-related information required for that connection is sent to said signaling network;
said radio terminal includes a plurality of radio interfaces and a plurality of applications, as well as an agent portion; and
said agent portion allows a radio interface corresponding to said signaling network among a plurality of radio interfaces to be retained in the standby condition, and allows the radio interface in the standby condition to receive said session-related information, so that an application and radio interface that are suitable for communication are selected by said agent from among said plurality of applications and said plurality of radio interfaces, respectively, based on said session-related information, to establish a session.

Suitably, the agent portion has the function to terminate the session upon completion of the communication and automatically set the radio interface in the idle state when it is no longer needed.

### BRIEF DESCRIPTION OF THE DRAWINGS

FIG. 1 is an explanatory diagram for explaining a schematic configuration of a Multimedia Integrated network by Radio Access Innovation (MIRAI) that embodies the present invention.
FIG. 2 is a system architecture diagram for explaining the architecture of a multimode radio terminal.
FIG. 3 is a sequence chart illustrating the process until the multimode radio terminal establishes and terminates a session.

### DETAILED DESCRIPTION OF THE INVENTION

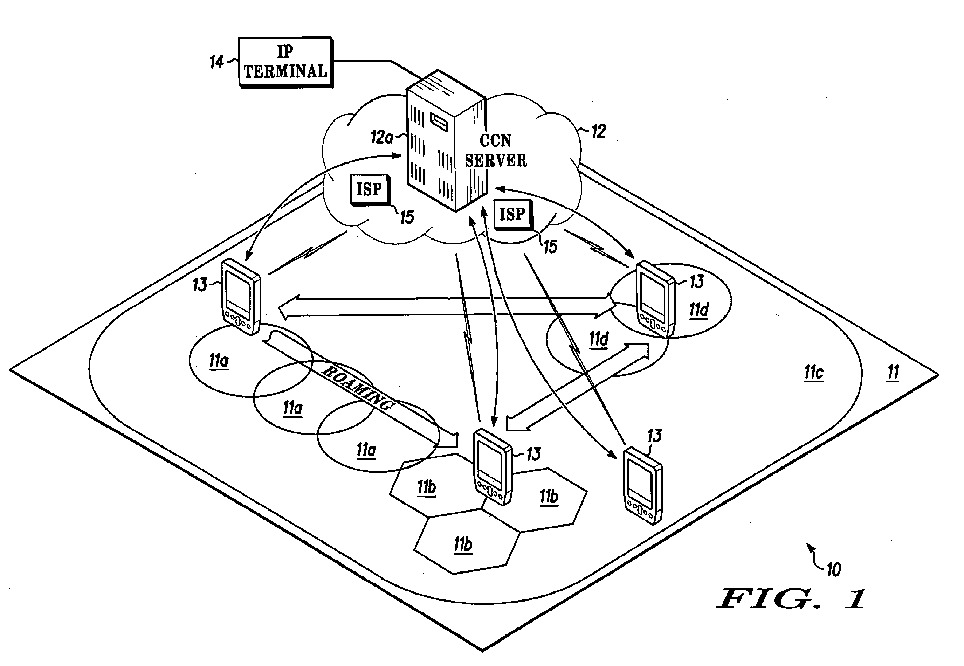

Next, one embodiment of the present invention is described with reference to the drawings. FIG. 1 is an explanatory diagram for explaining a schematic configuration of a Multimedia Integrated network by Radio Access Innovation (MIRAI) that embodies the present invention. In FIG. 1, a MIRAI network 10 is comprised of heterogeneous radio access networks (RANs) 11, Internet 12, and multimode radio terminals (MUT: Multi-service User Terminal) 13. The heterogeneous radio access networks 11 comprise a plurality of dissimilar radio access networks. In the present embodiment, a plurality of dissimilar radio access networks are made up of a PHS (Personal Handyphone System) network 11a, a wireless LAN (WLAN: Wireless Local Area Network) 11b, a paging network (Two-way Paging System) 11c, a cellular phone network 11d, and so forth. In other words, multiple service areas of the respective networks 11a-11d exist over the heterogeneous radio access networks 11.

The Internet 12 is a network for connection among the respective networks 11a-11d over the heterogeneous radio access networks 11, and Internet service providers (ISPs) 15 and CCN server 12a are provided over the Internet 12, which manage connections among the respective networks 11a-11d.

The multimode radio terminal 13, or MUT, communicates, over the heterogeneous radio access networks 11, another multimode radio terminal 13 located within the same network 11a-11d or another multimode radio terminal 13 located within another network 11a-11d. Furthermore, the multimode radio terminal 13 communicates with an IP terminal 14, such as an IP phone, via the Internet 12. The multimode radio terminal 13 is a portable radio terminal. While roaming over the heterogeneous radio access networks 11, the multimode radio terminal 13 can communicate with another multimode radio terminal 13 over the respective networks 11a-11d. The multimode radio terminal 13 can also communicate with the IP terminal 14 via the Internet 12, while roaming over the heterogeneous radio access networks 11. Thus, the multimode radio terminal 13 is equipped with respective radio interfaces and multiple applications corresponding to the respective networks 11a-11d, as well as the functionality for controlling them.

The MIRAI network 10 of the present embodiment employs the SIP (Session Initiation Protocol), as a basis, to implement a session control protocol for enabling the multimode radio terminal 13 to use the respective networks 11a-11d over the heterogeneous radio access networks 11.

Thus, the CCN server 12a located over the Internet 12 is also equipped with the SIP proxy function for transferring SIP messages and the gateway function for transferring the SIP to a specific radio access network 11a-11d. Furthermore, the IP terminal 14 connected to the Internet 12 is also equipped with the SIP function for communicating with the multimode radio terminal 13.

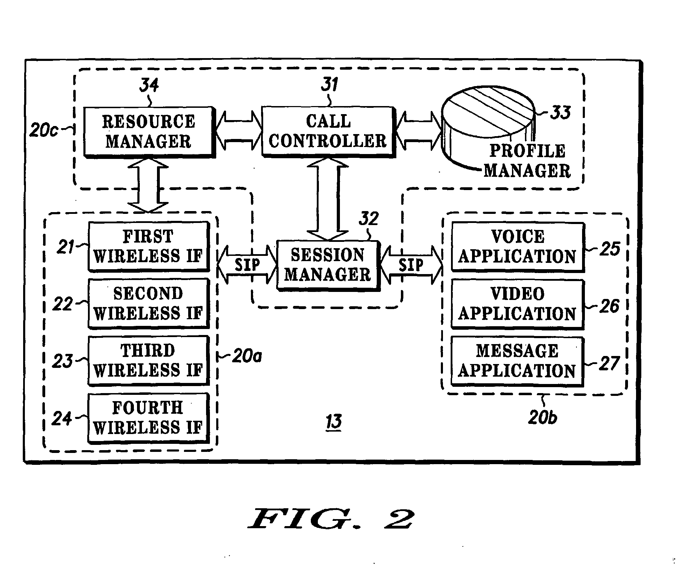

Next, the architecture of the multimode radio terminal 13 is described. FIG. 2 shows a system architecture diagram for explaining the architecture of the multimode radio terminal 13. In FIG. 2, the multimode radio terminal 13 includes an interface portion 20a, an application portion 20b, and an agent portion 20c.

The interface portion 20a includes a PHS radio interface (first radio IF) 21 for the PHS network 11a; a paging radio interface (second radio IF) 22 for the paging network 11c; a wireless LAN radio interface (third radio IF) 23 for the wireless LAN 11b; and a cellular phone radio interface (fourth radio IF) 24 for the cellular phone network 11d.

The application portion 20b includes various voice applications 25 for sending and receiving voice data by use of the network; various video applications 26 for sending and receiving image data by use of the network; various message applications 27 for sending and receiving message data by use of the network; and so forth.

Furthermore, the agent portion 20c includes a call control portion (CC: Call Controller) 31; a session management portion (SM: Session Manager) 32; a profile management portion (PM: Profile Manager) 33; and a resource management portion (RM: Resource Manager) 34.

The session management portion 32 includes a SIP (Session Initiation Protocol) proxy function to interpret a SIP message (INVITE) fed from said first through fourth radio IFs 21-24 and create SIP information required to establish a session, which is then sent to the call control portion 31.

According to the SIP information that is sent from the session management portion 32 and required to establish a session, the call control portion 31 controls the profile management portion 32 and resource management portion 34 to select each of said applications 25-27 and select each of said first through fourth radio IFs 21-24.

The profile management portion 33 stores, as a database, information related to said respective applications 25-27 installed in the multimode radio terminal 13. The profile management portion 33 also stores, as a database, information related to user preferences for the applications 25-27 and interfaces.

The resource management portion 34, which is a manager for controlling the respective first through fourth radio IFs 21-24, is designed to make the first through fourth radio IFs 21-24 active or idle in accordance with an instruction from the call control portion 31. The resource management portion 34 also includes the function for monitoring the receiving status (for example, the field strength of the carrier) when the first through fourth radio IF 21-24 is active.

More specifically, when communication is conducted by use of, say, the PHS network 11a, that is, communication is conducted via the first radio IF 21, the resource management portion 34 monitors the receiving status thereof. At that time, if the multimode radio terminal 13 roams beyond the service area of said PHS network 11a (if the communication is likely to be broken due to weaker field strength), the resource management portion 34 issues an instruction to the call control portion 31 before the ongoing communication is disconnected. Then, the resource management portion 34 sets other radio IFs in the standby condition, performs monitoring, and detects the field strength of the other communicable radio access networks for analysis. It then notifies the information on the communicable radio access networks to the call control portion 31.

It should be appreciated that in the present embodiment, the paging network 11c, which has the widest service area among the heterogeneous radio access networks 11, is employed as the signaling radio access network (channel). Thus, when the multimode radio terminal is in the standby condition, the resource management portion 34 only renders active the second radio IF 22 corresponding to the paging network 11c and sets it in the standby condition.

The agent portion 20c, which is comprised of the call control portion 31, session management portion 32, and so forth, is designed to perform beforehand interface setup (IP connection) processing conducted between the access point of the destination radio access network and the ISP 15, in order to enable communication over the designation radio access network based on the afore-mentioned information, before the ongoing communication is disconnected.

It should be appreciated that the IP terminal 14, which includes said SIP function, also has a similar agent portion 20c, interface portion 20a and application portion 20b, and their operation is the same; thus their details are not described herein. It should also be appreciated that the IP terminal 14 may have any architecture as far as it has the SIP function, and is not limited to the architecture shown in FIG. 2.

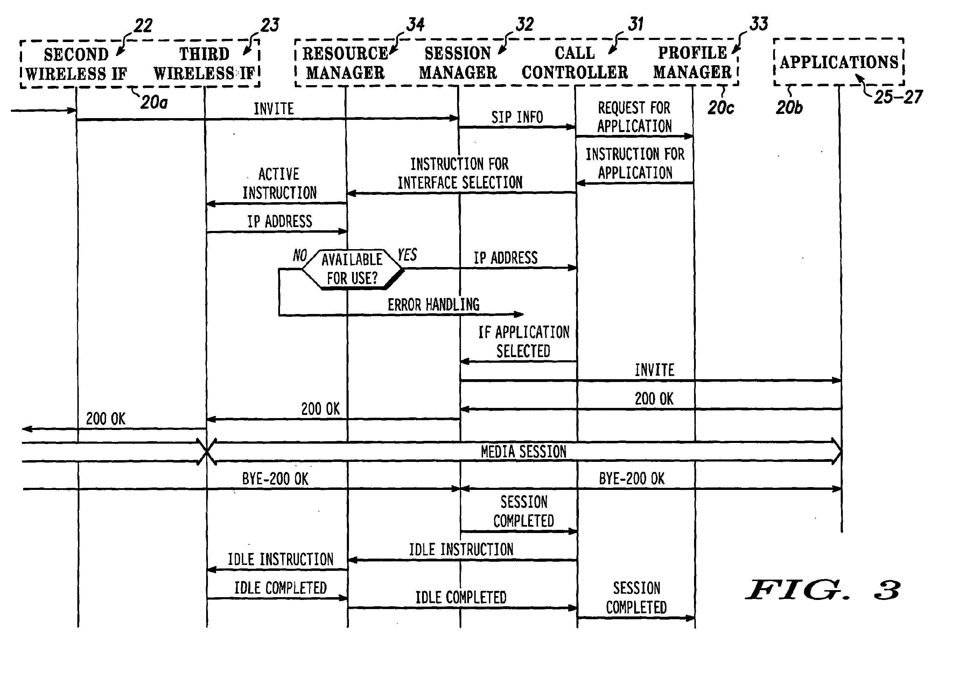

Next, the operation of the multimode radio terminal 13 so configured is described below in accordance with the sequence chart that describes the process until the multimode radio terminal 13 establishes and terminates a session, as shown in FIG. 3.

### (Establishing a Session)

It should be appreciated that for the sake of simplicity, the IP terminal 14 is a calling party, while the multimode radio terminal 13 is a called party. It should also be appreciated that because the called multimode radio terminal 13 is in the standby condition and the paging network 11c is a signaling channel, only the second radio IF 22 is in the active state.

Let us assume now that the calling IP terminal 14 sends a SIP message (INVITE) to the Internet 12. It should be appreciated that the information contained in the SIP message (INVITE) includes, for example, a call ID for identifying the session; media parameters (voice application, video application, message application, etc.); and a codec type. The SIP message (INVITE) sent to the Internet 12 is transferred to the CCN server 12a over the Internet 12. The CCN server 12a sends said SIP message (INVITE) to the called multimode radio terminal 13 via the paging network 11c as a signaling channel.

When the called multimode radio terminal 13 acquires said SIP message (INVITE) via the second radio IF 22, said SIP message (INVITE) is sent to the session management portion 32. While temporarily storing the information contained in the SIP message (INVITE), the session management portion 32 analyzes it to create SIP information required to establish a session. The SIP information that is created by the session management portion and required to establish a session is transferred to the call control portion 31.

The call control portion 31 selects an application 25-27 for use in communication with the profile management portion 33 in accordance with the SIP information, and acquires information related to user preferences. The call control portion 31 then issues to the resource management portion 34 a selection instruction to select the first through fourth radio IFs 21-24, while sending said information related to user preferences thereto.

The resource management portion 34 selects and renders active one (third radio IF 23, in this case) of the first through fourth radio IFs 21-24, in accordance with the selection instruction, the information related to user preferences, and the receiving conditions of the first through fourth radio IFs 21-24 at that time. When it is rendered active, the resource management portion 34 allows the selected radio IF to send the IP address to the call control portion 31. The call control portion 31 then sends the selected radio IF and application information (IP address and port number) to the session management portion 32.

The session management portion 32 acts as a SIP proxy to transfer said SIP message (INVITE) corresponding to the application 25-27 selected. Upon receiving the SIP message (INVITE), the application 25-27 returns to the session management portion 32 an SIP acknowledgement message (200 OK) that acknowledges said SIP message (INVITE).

The session management portion 32 returns the SIP acknowledgement message (200 OK) via the radio access network selected (wireless LAN 11b, in this case). The SIP acknowledgement message (200 OK) sent from the session management portion 32 to the wireless LAN 11b is transferred to the CCN server 12a over the Internet 12.
The CCN server 12a sends said SIP acknowledgement message to the calling IP terminal 14 via the Internet 12.

Subsequently, the calling IP terminal 14 and the session management section 32 of the called multimode radio terminal 13 exchange the SIP message, in a similar manner to the typical SIP, not via the CCN server but via the ISP 15, and establish a session therebetween.

### (Terminating a Session)

To terminate a session, a SIP message (BYE) for terminating the session is sent from the application of the multimode radio terminal 13 of either the calling or called party.
By utilizing the Record Route function of the SIP, the SIP message (BYE) for terminating the session is fed through the session management portion 32.

Upon detecting the SIP message (BYE) for terminating the session and the SIP message (200 OK) for acknowledging the SIP message (BYE), the session management portion 32 notifies the termination of the session to the call control portion 31. The call control portion 31 refers to the call ID, and sends to the resource management portion 34 an instruction to switch the radio IF (third radio IF 23, in this case) used in the session, from active state to idle state. Upon setting the third radio IF 23 in the idle state, the resource management portion 34 then notifies the call control portion 31 to that effect. The call control portion 31 sends to the profile management portion 33, a notification that the session has been terminated, thereby notifying that the session has been terminated.

Thus, the session between the calling IP terminal 14 and the called multimode radio terminal 13 is terminated. That is, the radio interface becomes idle.

(Interface Setup)
Next, an interface setup is described where if it is necessary to switch the radio access network, an IP connection is made between the access point of the target radio access network and the access network server of the ISP 15 in order to allow the multimode radio terminal 13 to maintain communication without interruption.

When the calling and called multimode radio terminals 13 are communicating with each other, the agent portion 20c of the calling multimode radio terminal 13 is monitoring the receiving status of that communication. If switching is made to a dissimilar radio access network, the agent portion 20c detects it before the ongoing communication is disconnected, as described hereinabove. The agent portion 20c performs beforehand an interface setup for IP connection between the access point of the target radio access network and the access network server of the ISP 15, before the session parameters are updated.

First, the agent portion 20c employs the radio IF that is in the standby condition or is currently used for communication to send to the CCN server 12a the location information of the radio terminal 13; the IP interface employed by the radio terminal 13, that is, the type of the first through fourth radio IF 21-24; and destination information including the address thereof (information related to the target radio access network).

According to said destination information, the CCN server 12a identifies the server of the ISP 15 for the IP connection with the access point of the target radio access network.

The CCN server 12a then requests the server provided by the identified ISP 15 to issue a service advance ticket as ad-hoc authentication information for enabling beforehand an interface setup with said radio terminal 13. The service advance ticket is comprised of a specific ID and an electronic signature against the ID, issued by ISP 15. If the communication is initiated after authentication when an IP communication service is to be received, a service connection may be hampered; thus, when an IP connection is to be made, sending the advance ticket permits the IP communication to be initiated, with the negotiations skipped. Accordingly, official authentication is performed as needed during communication.

When the service advance ticket is issued, the CCN server 12a sends the information required for IP connection to said radio terminal 13. The information required for IP connection includes DHCP (Dynamic Host Configuration Protocol) information, PPPoE (Point to Point Protocol over Ethernet ®) information, PPP (Point to Point Protocol) information, and said service advance ticket.
The DHCP information further includes an IP address, an IP subnet mask, a broadcast address, a DNS (Domain Name System) server address, a router IP address, a lease period of the address, and a destination address for updating the address. The PPPoE information includes an MAC (Media Access Control) address. The PPP information includes LCP (Link Control Protocol) information and NCP (Network Control Protocol) information. The CCN server 12a stores in the database the information required for IP connection, excluding the service advance ticket, so that information required for a certain interface setup is extracted corresponding to the ISP 15 to be connected.

When the radio terminal 13 receives the information required for interface setup from the CCN server 12a, the agent portion 20c of the radio terminal 13 sends said service advance ticket to the access network server of the ISP 15 for IP connection with the access point of the target radio access network. It should be appreciated that for the access network server of the ISP 15 connected to the access point of the wireless LAN 11b the radio terminal 13 sends the service advance ticket when the carrier is sensed and thus the communication is possible. Furthermore, for the ISP 15 connected to the access point of the cellular phone network 11d, the radio terminal 13 dials the access point thereof to send the service advance ticket thereto.

Upon receiving the service advance ticket, the access network server of the ISP 15 recognizes it as the service advance ticket that was previously issued at the ISP 15 to the CCN server 12a, and activates the connection with the radio terminal 13. The radio terminal 13 then employs the information required for interface setup that was sent from the CCN server 12a to make IP communication with the ISP 15 and perform interface setup. It should be appreciated that authentication is performed again during communication after switching, by use of CHAP (Challenge Handshake Authentication Protocol) or the like.

Accordingly, IP connection between the access point of the target radio access network and the access network server of the ISP 15 becomes ready during switching of the radio access network, so that the session can be maintained without interruption to the communication.

Next, the features of the present embodiment so configured are described below. (1) With the present embodiment, the multimode radio terminal 13 includes the call control portion 31, session management portion 32, profile management portion 33, and resource management portion 34, so that information related to the radio IF 21-24 and application 25-27 is stored and maintained therein. Additionally, by collaborating with the CCN server 12a over the Internet 12, the radio IF 21-24 and application 25-27 for use in communication can be selected efficiently.

(2) With the present embodiment, the multimode radio terminal 13 retains the information regarding the established session in the call control portion 31, session management portion 32, profile management portion 33, and resource management portion 34, and by combining it with the SIP function, it can sense the termination of the media session established by the session management portion 32. The session management portion 32 can then forcefully terminate the IP session via the call control portion 31, etc.

(3) With the present embodiment, selection of the radio network 11a-11d is performed by the multimode radio terminal 13. Thus, the bothersome need to send the radio IF and user information to the network is eliminated as compared to when it is selected on the network side, so that the signaling traffic can be reduced.

(4) With the present embodiment, because the multimode radio terminal 13 includes the call control portion 31, session management portion 32, profile management portion 33, and resource management portion 34, changes associated with increases/decreases or replacements of the applications and radio IFs can be easily accomplished as needed on the multimode radio terminal 13 side, that is, on the user's side.

(5) With the present embodiment, because the CCN server 12a is merely added over the Internet 12, only a little modification or change is needed to the existing radio network facilities.

(6) With the present embodiment, before the radio access network is switched, interface setup is performed beforehand for IP connection on the access network server of the ISP 15 to be connected to the access point of the target radio access network. Thus, IP connection during switching of the radio access network can be set up in a short time. The disconnect time based on the switching can be shortened.

It should be appreciated that the embodiment of the present invention may be altered in the following manner. In the afore-described embodiment, negotiation is conducted via the paging network 11c that is set as a signaling network; however, it is not limited thereto, but it may be conducted via a radio network that is not used and is communicable via carrier-sense, for example. Of course, negotiation may be conducted beforehand via the target radio network.

In the aforedescribed embodiment, a multimode radio terminal is employed as a radio terminal; however, it may be implemented by a SDR (Software Defined Radio) terminal.

As detailed above, according to the radio terminal session method of the present invention, a MIRAI network may be realized without imposing a burden on each of the radio access networks.

Furthermore, according to the interface setup method of the present invention, the IP connection during switching of a dissimilar radio access network can be set up quickly.

### [Description of the Reference Symbols]

- 10: Multimedia Integrated network by Radio Access Innovation (MIRAI)
- 11: heterogeneous radio access networks
- 12: Internet
- 13: multimode radio terminal (MUT)
- 11a: PHS network
- 11b: wireless LAN (WLAN)
- 11c: paging network as a signaling network
- 12a: CCN server
- 20a: interface portion
- 20b: application portion
- 20c: agent portion
- 21: radio interface for PHS (1st wireless IF)
- 22: radio interface for paging (2nd wireless IF)
- 23: radio interface for wireless LAN (3rd wireless IF)
- 24: radio interface for cellular phone (4th wireless IF)
- 25: voice application
- 26: video application
- 27: message application
- 31: call control portion
- 32: session management portion
- 33: profile management portion
- 34: resource management portion

## Claims

1. Multimedia Integrated network by Radio Access Innovation (10), MIRAI, that comprises a plurality of dissimilar radio access networks (11) and the Internet (12) that connects among said radio access networks, wherein:
one of said radio access networks is adapted to be employed as a signaling network;
a server (12a) is provided in said Internet such that when a request for connection with a radio terminal (13) is made, session-related information required for that connection is sent to said signaling network;
said radio terminal (13) includes a plurality of radio interfaces corresponding to the respective radio access networks and a plurality of applications, as well as an agent portion (20c) ; and **characterized by**:
said agent portion (20c) is adapted to allow a radio interface corresponding to said signaling network among a plurality of radio interfaces to be retained in the standby condition, and is adapted to allow the radio interface in the standby condition to receive said session-related information, so that said agent portion is adapted to select an application and radio interface that are suitable for communication from among said plurality of applications and said plurality of radio interfaces, respectively, based on said session-related information, to establish a session.

2. Multimedia Integrated network by Radio Access Innovation (10) according to claim 1, wherein the agent portion (20c) is adapted to terminate the session upon completion of the communication and automatically set the radio interface in the idle state when it is no longer needed.

## Patentansprüche

1. Multimedia Integrated Network by Radio Access Innovation, MIRAI, bzw. Multimedia-integriertes Netz durch Funkzugriffsinnovation (10), welches eine Vielzahl von verschiedenen Funkzugriffsnetzen (11) und das Internet (12), welches unter den Funkzugriffsnetzen verbindet, aufweist, **dadurch gekennzeichnet, dass**:
eines der Funkzugriffsnetze derart ausgelegt ist, dass es als ein Signalisierungsnetz verwendet werden kann;
ein Server (12a) in dem Internet bereitgestellt ist, so dass beim Anfordern einer Verbindung mit einer Funkstation (13) die für diese Verbindung notwendigen sitzungsbezogenen Informationen an das Signalisierungsnetz gesendet werden;
die Funkstation (13) eine Vielzahl der den jeweiligen Funkzugriffsnetzten zugeordneten Funkschnittstellen und eine Vielzahl von Anwendungen sowie einen Agentenabschnitt (20c) aufweist; und wobei
der Agentenabschnitt (20c) derart ausgelegt ist, dass er einer dem Signalisierungsnetz zugeordneten Funkschnittstelle aus einer Vielzahl von Funkschnittstellen ermöglicht, in dem Standby-Zustand zu bleiben, und derart ausgelegt ist, dass er der Funkschnittstelle in dem Standby-Zustand ermöglicht, die sitzungsbezogenen Informationen zu empfangen, so dass der Agentenabschnitt derart ausgelegt ist, dass er eine Anwendung und Funkschnittstelle, die für die Kommunikation geeignet sind, aus der Vielzahl von Anwendungen bzw. der Vielzahl von Funkschnittstellen basierend auf den sitzungsbezogenen Informationen auswählt, um eine Sitzung aufzubauen.

2. Multimedia Integrated Network by Radio Access Innovation (10) nach Anspruch 1, **dadurch gekennzeichnet, dass** der Agentenabschnitt (20c) derart ausgelegt ist, dass er die Sitzung bei Abschluss der Kommunikation beendet und die Funkschnittstelle automatisch in den Ruhezustand bringt, wenn sie nicht länger gebraucht wird.

## Revendications

1. Innovation de réseau intégré multimédia d'accès par radio (10), MIRAI (*Multimedia Integrated network by Radio Access Innovation*), qui comporte une pluralité de réseaux d'accès par radio distincts (11) et Internet (12) qui est connecté parmi lesdits réseaux d'accès par radio, dans laquelle:
l'un parmi lesdits réseaux d'accès par radio est adapté en vue d'être utilisé en tant que réseau de signalisation;
un serveur (12a) est prévu sur ledit Internet de sorte que lorsqu'une demande de connexion avec un terminal radio (13) est exécutée, des informations de session nécessaires en vue de cette connexion sont transmises audit réseau de signalisation;
ledit terminal radio (13) comporte une pluralité d'interfaces radio correspondant aux réseaux d'accès par radio respectifs et une pluralité d'applications, ainsi qu'un partie d'agent (20c); et **caractérisée en ce que**:
ladite partie d'agent (20c) est adaptée en vue de permettre une interface radio correspondant audit réseau de signalisation parmi une pluralité d'interfaces radio à maintenir dans un état en attente, et adaptée en vue de permettre à l'interface radio dans l'état en attente de recevoir lesdites informations de session, de sorte que ladite partie d'agent soit adaptée en vue de sélectionner une application et une interface radio qui sont adaptées à la communication à partir de ladite pluralité d'applications et de ladite pluralité d'interfaces radio, respectivement, sur la base desdites informations de session, en vue d'établir une session.

2. Innovation de réseau intégré multimédia d'accès par radio (10), MIRAI (*Multimedia Integrated network by Radio Access Innovation,* en anglais), selon la revendication 1, dans laquelle la partie d'agent (20c) est adaptée en vue de mettre fin à la session postérieurement à la communication et de régler automatiquement l'interface radio dans un état au repos lorsqu'elle n'est plus nécessaire.
